(19) Europäisches Patentamt / European Patent Office / Office européen des brevets

(11) **EP 3 057 008 A1**

(12) **EUROPEAN PATENT APPLICATION**

(43) Date of publication:
17.08.2016 Bulletin 2016/33

(51) Int Cl.:
*G06F 17/30* (2006.01)   *G06F 17/27* (2006.01)

(21) Application number: 15305219.6

(22) Date of filing: 13.02.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sepage**
**75011 Paris (FR)**

(72) Inventor: **Stankovic, Milan**
**75011 PARIS (FR)**

(74) Representative: **Regimbeau**
**20, rue de Chazelles**
**75847 Paris Cedex 17 (FR)**

(54) **Method for discovering relevant concepts in a semantic graph of concepts**

(57) The present invention is related to a method for identifying in a given semantic graph of linked concepts a set of concepts matching the content of textual data, the semantic graph of linked concepts being stored in at least one equipment (10) connected to a network (20), the methods comprising of the following steps:

(a) identifying at least one initial concept belonging to the given semantic graph from sample textual data in natural language selected at a workstation (1) connected to the network (20);

(b) accessing the equipment (10) to identify a list of candidate concepts in the given semantic graph, each candidate concept being likely to be relevant to the initial concept;

(c) identifying as matching concepts a given number of candidate concepts, such that the matching concepts constitutes a subset of the farthest candidate concepts in the semantic graph according to a given distance function.

**FIG. 2**

**Description**

FIELD OF THE INVENTION

The invention concerns the field of the Semantic Web.
More precisely, the invention relates to a method for identifying in a given semantic graph of linked concepts a set of concepts matching the content of a text.

BACKGROUND OF THE INVENTION

An increasing number of users buy travel tickets and arrangements online. With this practice the task of choosing where to go on vacation has also became an integral part of user interaction with the Web. According to studies, 70% of leisure travelers who buy travel products online start interacting with the Web with no fixed choice of destination, looking do discover good affordable options and make a decision. In this process, the users are confronted to a set of commercial websites with information about destinations, not well adapted to the paradigm of choice. The key elements of the issues that contribute to lengthily process include:

- Multiplicity of partial sources and websites pushes the user to feel unsure if he took everything into account, usually spend many hours looking for destination. The fact that most interfaces are search and not recommendation interfaces contributes to this as well.
- Popular destinations dominate when one navigates the web, while people have the natural need to discover and feel special. They usually need to feel that a destination is a good choice for them, and not just a place where many people go.
- It is often difficult to specify the criteria of a good vacation. When asked, users have difficulties to explicit why they consider a particular destination a good choice, but can easily remember examples of where they spent good vacations.
- There is lots of content about destinations and travel, but very little tools to personalize the destination discovery experience in a relevant way.

Some "travel recommendation engines" have been proposed to provide travel advice to a user from profile data (likes, dislikes, constraints, etc.). Document US 2002/0147619 describes such an engine. However, this engine only combines information from various expert knowledge bases, i.e. "human" knowledge, to provide recommended travel destination. Furthermore, heavy input of data by the user is requested in order to have personalized recommendation (each user is unique in its interests and ways to discover travels offers).
The same problem exists with respect to advertising platforms. "Advertisement recommendation engines" aim at determining the right ads (among a plurality provided by various customers) to be displayed to a user (for example as banners within a web page), i.e. the ones which would match the user's personality at best.
To avoid the need for human involvement in recommendations (whether it be for travel or advertisement), the use of the Semantic Web is considered. The Semantic Web is a set of technologies, which aim to make the content of the resources of the Web accessible and usable by machines (in particular thanks to programs and software agents) through a system of data and metadata.
RDF (Resource Description Framework) is the language the most often used. RDF is a data model of semantic graph (a collection of RDF statements can intrinsically represent a graph of linked "concepts"), designed for helping to describe the resources on the Web and their metadata, allowing automated processing. It is implemented using a variety of syntax formats, but XML is generally preferred.
The mentioned items of a semantic graph named "concepts" (or sometimes "entities") are to be understood as a basic unit of computationally represented meaning, usually embodying a topic of interest. A concept has a representation intended for human consumption (sometimes a plurality of representations, when the same concept is known under more than one name), and an identifier (called a URI, Uniform Resource Identifier) for identification by machines. The concept meaning is further specified by possible properties, that may have literal values or point to another concept (examples of concepts will be presented below). Properties that point to other concepts create the links between concepts that constitute the semantic graph.
Thanks to initiatives like Linked Open Data, a practice of publishing structured data on the Web built upon compatible standard Web technologies and interlinking it has emerged, enabling the emergence of a giant rapidly-growing semantic graph of linked concepts describing general knowledge as particular areas (including travels). Most notably, databases such as DBpedia or Freebase contain millions of concepts from general encyclopedic knowledge, and are still exploring the internet to gather new concepts.
Such ability to automatically process the human knowledge by machines offers new possibilities for many usage scenarios and especially for helping solving various problems, e.g. innovation problems. To this end, there are known methods for identifying in a given semantic graph of linked concepts a set of concepts matching the content of a text, as for example described by the European application EP2634705. Such a method is efficient for retrieve relevant concepts from a large amount of candidate items, but not suitable for providing destinations or advertisement. Indeed a user wishes to be provided relevant proposal, but not the "most relevant" ones: the user wishes to be proposed various and unexpected items, and to be "surprised". For example, if the user has been in the Hawaii island, he wishes not to be proposed other islands of the Hawaiian Archipelago (such as Ni'ihau, Kaua'i, O'ahu) which are likely to be "too" similar. Such a method does not allow to manipulate diversity of results.

From the description of a given travel of a user, the idea is to explore the semantic graph in search of concepts related to alternative travels the user might be interested in. Paths and patterns in geo-semantic linked data graphs can thus help provide more efficient access to relevant destination choices, and can enable the creation of a highly personalized recommendation system, even if in the millions of existing concepts known to humanity, finding those that are the most suitable remains very difficult.

There is a need for a smart, efficient, and fast graph-based recommendation system (and in particularly a destination recommendation system) which:

- Enables the user to discover relevant items (travel destinations), some of which he may not have considered/known about, i.e. "surprising" items.
- Proposes a set of items similar to user preferences that are sufficiently diverse among each other in order to facilitate choice.
- Requires minimal input of user data for seamless integration into existing browsing and choice practices.

SUMMARY OF THE INVENTION

The present invention proposes a method for identifying in a given semantic graph of linked concepts a set of concepts matching the content of textual data, the semantic graph of linked concepts being stored in at least one equipment connected to a network, the methods comprising of the following steps:

(a) identifying at least one initial concept belonging to the given semantic graph from sample textual data in natural language selected at a workstation connected to the network;
(b) accessing the equipment to identify a list of candidate concepts in the given semantic graph, each candidate concept being likely to be relevant to the initial concept;
(c) identifying as matching concepts a given number of candidate concepts, such that the matching concepts constitutes a subset of the farthest candidate concepts in the semantic graph according to a given distance function.

Preferred but non-limiting features of the present invention are as follows:

- the step (a) comprises inputting sample textual data in natural language at a workstation connected to the network; then performing a semantic analysis of the sample textual data to extract at least one initial concept belonging to the given semantic graph;
- the list of candidate concepts identified at step (b) comprises the concepts of the semantic graph within a given maximum distance according to a given graph distance function away from at least one initial concept;
- a database of recently used concepts being stored in the equipment, the list of candidate concepts identified at step (b) comprising the concepts of the database within a given maximum distance according to a given database distance function away from the initial concept;
- each concept of the database is associated with at least one numerical attribute, the given database distance being function of the difference of attributes between two concepts of the database;
- the step (b) comprises a step of merging the candidate concepts identified within the graph and the candidate concepts identified within the database;
- the step (c) further comprises ranking the list of identified candidate concepts according to at least one given criterion so as to remove from the list candidate concepts within a given score;
- the step (c) comprise selecting the subset among all the subsets of the given number of candidate concepts such that the average distance between concepts of the selected subset is sensibly the highest;
- step (c) comprises:

(c1) selecting the subset of the given number of candidate concepts with the highest scores;
(c2) identifying the two closest concepts within said subset;
(c3) replacing one of the two identified concept by another candidate concept such that the average distance

3

between this candidate concept and the concepts of the subset is minimal among all other available candidate concept;
(c4) repeating (c2) and (c3) up to reach a stable subset.

DETAILED DESCRIPTION OF THE INVENTION

*Environment*

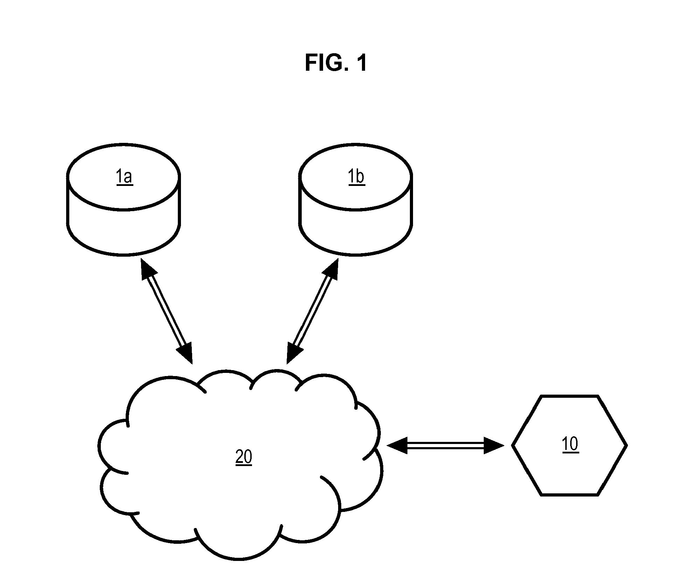

With reference to figure 1, the invention concerns a method for identifying in a given semantic graph of linked concepts a set of concepts matching the content of textual data, the semantic graph of linked concepts being stored in an equipment 10 connected through a network 20, particularly the internet

However, the invention is not limited to a specific environment, and the equipment 10 shall be understood as any "source(s)" from which the semantic graph of linked concepts could be accessed through the network 20. The equipment 10 may include one or more piece(s) of equipment.

In this case the network 20 is Internet, the equipment 10 is notably a Web server.

Indeed, the already mentioned large semantic graphs of linked concepts from general encyclopedic knowledge (e.g. DBpedia, Freebase, etc.) are hosted in the form of Graph data stores, in particular RDF databases, in one or more remote servers. The given semantic graph of linked concepts may be a particular graph, or a combination thereof. These graphs are indeed connected to one another, forming a global graph.

The method according to the invention thus remotely accesses via the network 20 to this or these databases from a workstation 1 a, 1 b where sample textual data in natural language is inputted, or at least selected.

Furthermore, it shall be noted that the semantic graph can be hosted on the very workstation 1 a, 1 b, enabling offline functioning. In such a case, the "local" semantic graph is regularly updated from the equipment 10.

The sample textual data in natural language to be processed is, as explained generally the description of a given travel (a previous travel that the user has liked, or simply an idea of travel) of the user in the case of travel recommendation (or a previous purchase of the user in the case of advertisement recommendation), textual part of a webpage (for example a web page of a travel agency), or at least a list or query words. In the following description, the example of destination recommendation will be presented (the skilled person would know how to adapt this invention to any field of recommendations), and in this example the sample textual data is simply the name of a city visited by the user.

The text may be inputted directly by the user at the workstation 1 by typing, or an already typed text may be uploaded. If the workstation has suitable input means, the text can also be voice-inputted through speech recognition or paper-inputted through scanning and OCR (Optical Character Recognition). Please note that the text may also be already hosted somewhere in the network 20. In which case, inputting the text at the workstation is to be understood as only indicating how to retrieve the text (for example by inputting its URL).

For these various purposes, a client application may be installed on the workstation, but alternatively a simple browser may be used.

The "matching concepts" which are intended to be identified because of the method according to the invention are concepts relevant to potential relevant alternative items, and which are as diverse as possible. In the case of travel destinations, the "matching concepts" are concepts relevant to destinations the user may like without having considered/known about (i.e. cities, trips, travel offers, etc.), and which are sufficiently diverse among each other to facilitate choice. It is to be noted that the whole method may be asynchronous, i.e. the initial concepts may be collected continuously during the user's visits to various webpages (and the matching concepts provided later).

In a first scenario the user is connected to a travel website or a travel mobile application, which is hosted on a Web server and connected to or being part of a larger travel sale system. A travel Sale System is a system manipulating travel-related data, often but not necessarily, for lucrative purposes that may result in user action such as buying travel-related products and services, or visiting a travel-related website or application. The travel website/mobile application is an interactive structure offering the user a possibility to interact with textual and multimedia objects related to travel destinations, and potentially offering (directly or indirectly or on connected media) the possibility to buy travel products and services such as (but not limited to) transport tickets, hotel stays and packaged arrangements.

Typically, a user may consult information and multimedia objects about destinations and travel possibilities, and may search for objects related to particular destinations of his interest. In such a scenario, the Travel Sale System would use the users current searches, and would combine them with potential other knowledge it has about the user in order to initiate a destination recommendation process using the present method, which returns a list of destinations that are relevant for the user to discover. Those suggestions may, potentially after additional filtering by the travel sale system to match its own best interest and promotion policies, be shown in a certain way to the user via the Travel Website or Mobile Application.

In another scenario, the user may be passive. A Travel Sale System, having knowledge about the user (for instance but not limited to user's past travels or interests), potentially gathered during previous user's interactions with the Travel Website/Mobile Application or other points of communication with the Travel Sale System, may use that information to initiate the destination recommendation process using the present method. After potential filtering to match destination promotion policies, A Travel Sale System may, in a supervised (with human supervision) or unsupervised fashion perform a notification to the user proposing him the resulting destinations. This notification can be conveyed via e-mail, paper mail, app notification or other means of interaction.

*Initial concept*

In the first step (a), at least one initial concept belonging to the given semantic graph is identified. In a preferred embodiment in which the sample textual data has been inputted in natural language at the workstation 1, a semantic analysis is then performed to this end.

By "initial concepts" (also named "seed concepts"), it is meant concepts directly describing the inputted information, i.e. the given travel of the user. In other words, initial concepts are generally mined from the wording of the text by parsing followed by lexical analysis to match concepts which are known to belong to the given semantic graph.

This step may be performed by the workstation 1 itself, or alternatively by a server dedicated to semantic analysis, this server being also connected to the internet 20. The inputted text is in this case transmitted from the workstation 1 (or from the indicated location where the text is found, for example its URL) to the dedicated server where the semantic analysis is performed. Identified initial concepts are thus sent back to the workstation 1. It is to be noted that the workstation 1 may automatically provide a list of URLs of webpages visited by the user (see below).

Numerous efficient semantic analysis engines are known (e.g. Zementa, Open Calais, DBpedia Spotlight, etc.), and the person skilled in the art would know how to use them within the framework of the invention.

For example, if the user has searched for information about Réunion Island and has visited a webpage stating "Reunion Island offers an exceptional playground for hiking lovers", a semantic analysis should identify meaningful words "Reunion", "Island", "hiking lovers" by simply parsing the phrase. Given the graph DBpedia (whose concepts are Wikipedia's pages), the associate initial concepts are then http://dbpedia.org/resource/Reunion, http://dbpedia.org/resource/Island and

http://dbpedia.org/resource/Hiking.

The aim of the method according to the invention is to help explore the semantic graph of DBpedia concepts, for example reaching the relevant concept http://dbpedia.org/resource/Iceland, which is an island famous for trails that the user may not have thought of because it is very less similar to Reunion Island than destinations such as Mauritius.

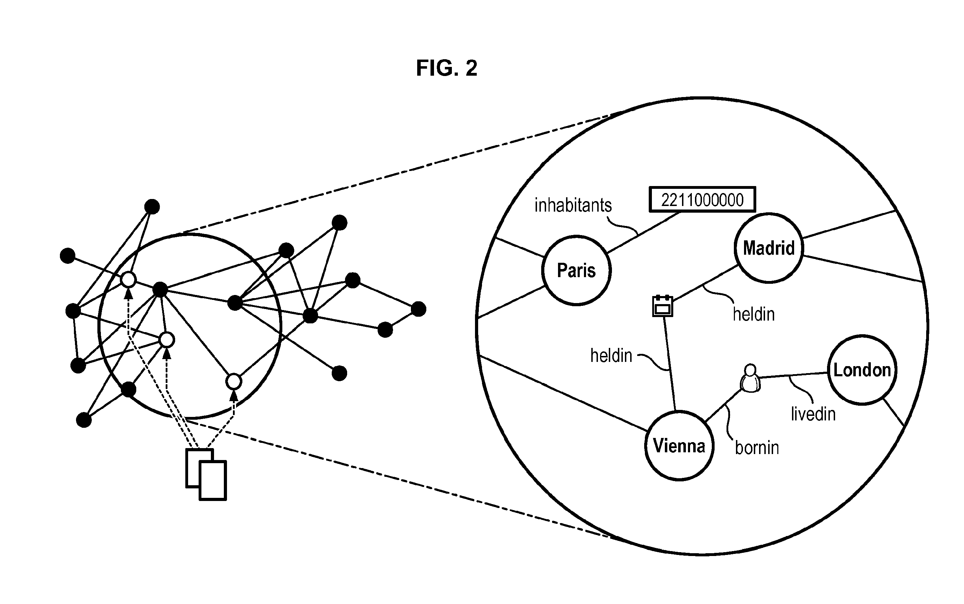

The association of parsed words and concepts may be performed for example by a search engine, in particular Wikipedia's search engine in the case of DBpedia. The initial concepts are then located on the semantic graph. **Figure 2** represents an example of semantic graph (each point is a concept), wherein six initial concepts (circled white points) are located. As it can be noticed, the initial concepts are not necessarily directly linked to each other.

It is to be noted that semantic analysis is preferred but not necessary performed. In particular, some Internet websites use reference numbers in their URLs: each page. For example, a travel agency may have page1=snorkeling in Bali, page2=Safari in Kenya, page3=party in Berlin, etc. Therefore, by knowning the list of numbers (which may be provided by the website), the at least one initial concept may be identified thanks to a correlation table. In our previous example, the initial concepts http://dbpedia.org/resource/Reunion, http://dbpedia.org/resource/Island and http://dbpedia.org/resource/Hiking could have been found in this way.

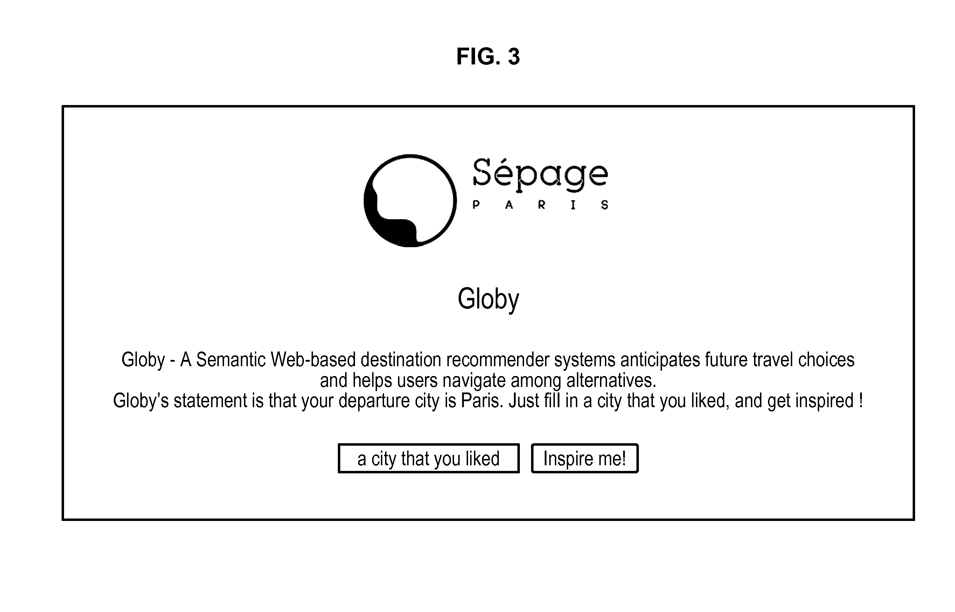

In the example of **figure 3,** which represents an interface of the example application "GlobeAdvent", the user may input on a webpage the name of a city, which will be as explained the only initial concept.

*Candidate Concepts*

The next step (b) of the method is to access the equipment 10 to identify a list of candidate concepts in the given semantic graph, each candidate concept being likely to be relevant to the initial concept, in particular by accessing the semantic graph (which in particular consists of sending a query over the graph, for example using the SPARQL language through HTTP protocol) and/or by accessing a database of recently used concepts being stored in the equipment 10. The sole use of semantic data graphs is referred as Linked Data Destination Generation (LDDG), whereas the sole use of the database (local index data) is referred as Index-Based Destination Generation (IBDG) that is using. Using both is referred as Hybrid (or HLDDG) approach.

The "candidate concepts" retrieved from graph exploration (LDDG) are to be understood as concepts that are found at a certain distance (calculated according a certain graph distance function) from the initial concepts, and that are likely to be relevant. Among them, the "matching concepts" will be identified in a further step.

The candidate concepts are spotted in this embodiment as the concepts of the semantic graph within a given maximum distance away from an initial concept. Complex distance functions (for example transversal distance functions) may be found in the document EP2634705, but as a simple example a distance function between two given concepts of the semantic graph may be calculated as the number of links to cross for traversing the graph from one concept to another.

The value (*MaxLevel*) of given maximum distance is set by the user (or preset). The higher this value the more deeply the graph will be explored (and the more likely the set of candidate concepts will contain all the matching concepts), but the longer the computing time will be. According to tests in the case of DBpedia, a *MaxLevel* of 3 or 4 appears to have more than enough of every matching concept, and the level 2 is sufficient if the end user of the results is not a machine (it is difficult for a human to read and assimilate more than 200 concepts in a reasonable time).

The "candidate concepts" retrieved from the database (IBDG) are to be understood as concepts that are found at a certain distance (calculated according a certain database distance function) from the initial concepts, and that are likely to be relevant. Among them, the "matching concepts" will be identified in a further step.

In particular, each concept of the database is preferably associated with at least one numerical attribute, the given database distance being function of the difference of attributes between two concepts of the database. For example, the numerical attribute may be a temperature of the destination (the database distance function is therefore a temperature difference between geographical locations), or coordinates (the database distance function is therefore a euclidian distance between geographical locations)

For each distance measure and for each destination the system will create an index - a collection of for example 15 least distant (most similar) destinations with values of distance. Whenever a distance function is calculated anywhere in the system for two destinations (a,b), the system will verify if the resulting distance value enables the storing of this couple in one of the indexes (the index of the distance measure in question for destination a, or for destination b) by comparing the value to top 15 (smallest) values that are already stored in the index. If so, the index will store the new destination and delete the existing destination with the highest distance value among the 15.

Eligibility can for example be expressed with the following function, where geodist(a,b) is the Euclidian distance between two places a and b.

$$eligible(d) = \begin{cases} true & geodist(origin_{example}, A) * \sqrt{2} > geodist(origin_{current}, d) \\ false & otherwise \end{cases}$$

IBDG generator can be configured to use indexes of different database distance functions. We call DM the set of distance functions on indexes of which IBDM operates. The retrieve function of IBDG returns the union of destinations present in indexes of all distance functions from DM, that concerns the initial concept A.

$$retrieve_{IBGD}(A) = \bigcup_{dm \in DM} index(dm, A)$$

For example, given the database distance from initial concept "Vienna" of Table 1, the candidate concepts retrieved in the present case from the database (IBDG), relying on both population and costal distance, would be Moscow (0), Madrid with the value of 0.15 (sum of population and costal distance, that were both previously normalized to the scale of 0-1), Amsterdam (0.3), Cannes (0.6), London (0.6) and Barcelona (1).

Table 1

| Indexes | | | | |
|---|---|---|---|---|
| Population Distance | | ··· | Costal Distance | |
| Vienna | Madrid, 0.15 | Vienna | Madrid, 0 | |
| | Amsterdam, 0.3 | | London, 0 | |
| | Cannes, 0.6 | | Moscow, 0 | |
| | ... | | ... | |

(continued)

| Indexes | | |
|---|---|---|
| Population Distance | ⋯ | Costal Distance |
| London, 0.7 | | Barcelona, 1 |

As explained, a Hybrid approach may be performed, which comprise a step of merging the candidate concepts identified within the graph and the candidate concepts identified within the database.

$retrieve_{HLDDG}(A,D)=retrieve_{LDDG}(A,D)\cup retrieve_{IBDG}(A)$, wherein A is a set of initial concepts and D a given graph distance function.

In our particular case, the results of retrieveIBDG and retrieveLDDG may be merged in 30:70 proportion, so that most results still come from the semantic graph.

The important principle behind the Hybrid approach is a social one. The more users use the system the more different destinations will populate indexes, and the more different suggestions will be made to new users. While this same principle exists with collaborative filtering approaches, in our case, the recommendations made to new users, even though they benefit from past interactions of other users do not necessarily include suggestions made to other similar users. When looking at the example given above, where are recommended destinations similar to Vienna using indexes relevant to Vienna. These indexes may have been generated when making suggestions for other cities (Madrid, Barcelona, London, etc.) where Vienna was one of the suggestions for which have been calculated distances. In this way, LDDG feeds the filtering process that enriches the indexes, then in turn serve for IBDG measure. The side effects (index-creation) of searches of one user, define in some way the searches of the following users thus creating a certain latent form of collective intelligence and virtual collective paths.

For a more diverse and tendency-aware functioning of the system, it is possible to include periodic random element elimination form the index. That ensures to disable the index from converging towards a fixed set of best alternatives.

*Filtering*

In the preferred embodiment of Hybrid approach, the step (b) adventageously further comprises ranking the list of identified candidate concepts according to at least one given criterion so as to remove from the list candidate concepts within a given score.

This is a filtering step. The criteria may be external from the concepts, and provided by catalogues: For example, using a flight price table, the most expensive destinations may be removed

*Selection of the most diversified candidate concepts*

In the final step (c), are identified as matching concepts a given number of candidate concepts (for example five candidate concepts in the example of GlobeAdvent), such that the matching concepts constitutes a subset of the farthest candidate concepts in the semantic graph according to a given distance function. By "farthest", it is meant that the matching concepts are the most distant from each other among the candidate concepts.

In particular, the distance function may be a graph distance function and/or a database distance function among the ones previously mentioned.

This step (c) may comprise selecting the subset among all the subsets of the given number of candidate concepts such that the average distance between concepts of the selected subset is sensibly the highest.

In particular, finding the best subset (i.e. the subset such that the average distance between concepts of the selected subset is the highest) is possible, but require exponential time. Given the need for real-time performing of the method (the concepts have be processed again at each time the user modifies the inputs), faster algorithms are required.

Consequently, by "sensibly the highest", it is meant "the highest found in polynomial time", which is the generally either the highest possible, or least almost the highest possible.

To this end, the step (c) preferably comprises the following substeps:

(c1) selecting the subset of the given number (i.e. as much as matching concepts wished) of candidate concepts with the highest scores (alternatively they can be randomly selected, but starting with candidate concepts with the highest scores increases the probability that the final subset is the optimal one);

(c2) identifying the two closest concepts within said subset (according to a given distance function), this pair being called the "weak spot" as it consists of the two less different concepts of the subset;

(c3) replacing (if possible) one of the two identified concept by another candidate concept such that the average distance between this candidate concept and the concepts of the subset (in particular the mean of the distances between each possible pair of concepts among this candidate concept and the concepts of the subset) is minimal among all other available candidate concept. In other words, the "weak spot" is replaced by a stronger one if it exists. Preferably, only candidate concepts which have not already tried as replacement (i.e. concepts which had never formerly been in the subset) are proposed;

(c4) repeating (c2) and (c3) up to reach a stable subset, i.e. up to not find any another candidate concept such that the average distance between this candidate concept and the concepts of the subset is inferior to the average distance between the concepts of the subset (including the two identified concept of the current weak spot). A stable subset can alternatively be reached if there are no more remaining candidate concepts (all have been tried as replacement).

*Results*

The identified matching concepts are finally outputted to the user, preferably in an ergonomic and informative way.

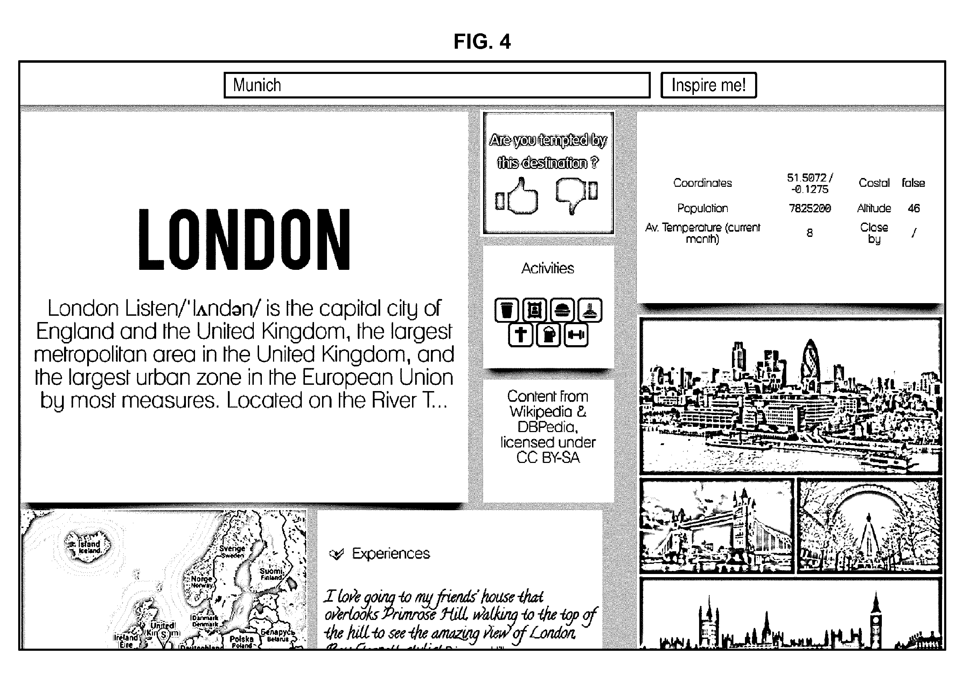

Results for the input Munich are for example shown by **figure 4:** apart from London, Berlin, Glasgow, Bologna or Hannover are proposed.

In this example, multiple data sources are combined to allow the user to project himself into the experience of being in a suggested destination. In particular, comments left on social network about points of interest can be analyzed, to extract those with positive experiences and show them to the user. May also be presented (in the graphical form - icons) a list of activates that one can do in the city. This list is extracted list by analyzing types of popular places in the given city on social networks. By observing activity types and reading experiences the user can get an idea of how is it like to be there, and if he can find pleasant ways to spend time there. This is a major element of supporting the users in making a choice: allowing them to project themselves in the future after the choice and compare it with their intrinsic expectations.

**Claims**

1. A method for identifying in a given semantic graph of linked concepts a set of concepts matching the content of textual data, the semantic graph of linked concepts being stored in at least one equipment (10) connected to a network (20), the methods comprising of the following steps:

(a) identifying at least one initial concept belonging to the given semantic graph from sample textual data in natural language selected at a workstation (1) connected to the network (20);
(b) accessing the equipment (10) to identify a list of candidate concepts in the given semantic graph, each candidate concept being likely to be relevant to the initial concept;
(c) identifying as matching concepts a given number of candidate concepts, such that the matching concepts constitutes a subset of the farthest candidate concepts in the semantic graph according to a given distance function.

2. A method according to claim 1, wherein the step (a) comprises inputting sample textual data in natural language at a workstation (1) connected to the network (20); then performing a semantic analysis of the sample textual data to extract at least one initial concept belonging to the given semantic graph.

3. A method according to any one of preceding claims, wherein the list of candidate concepts identified at step (b) comprises the concepts of the semantic graph within a given maximum distance according to a given graph distance function away from at least one initial concept.

4. A method according to any one of preceding claims, wherein a database of recently used concepts being stored in the equipment (10), the list of candidate concepts identified at step (b) comprising the concepts of the database within a given maximum distance according to a given database distance function away from the initial concept.

5. A method according to claim 4, wherein each concept of the database is associated with at least one numerical attribute, the given database distance being function of the difference of attributes between two concepts of the database.

**6.** A method according to claim 3 and one of claims 4 and 5, wherein the step (b) comprises a step of merging the candidate concepts identified within the graph and the candidate concepts identified within the database.

**7.** A method according to claim 6, wherein the step (c) further comprises ranking the list of identified candidate concepts according to at least one given criterion so as to remove from the list candidate concepts within a given score.

**8.** A method according to any one of preceding claim, wherein the step (c) comprise selecting the subset among all the subsets of the given number of candidate concepts such that the average distance between concepts of the selected subset is sensibly the highest.

**9.** A method according to claim 7 and 8 in combination, wherein step (c) comprises:

(c1) selecting the subset of the given number of candidate concepts with the highest scores;
(c2) identifying the two closest concepts within said subset;
(c3) replacing one of the two identified concept by another candidate concept such that the average distance between this candidate concept and
the concepts of the subset is minimal among all other available candidate concept;
(c4) repeating (c2) and (c3) up to reach a stable subset.

FIG. 1

FIG. 2

**FIG. 3**

# Sépage
### P A R I S

## Globy

Globy - A Semantic Web-based destination recommender systems anticipates future travel choices and helps users navigate among alternatives.
Globy's statement is that your departure city is Paris. Just fill in a city that you liked, and get inspired !

| a city that you liked | Inspire me! |

EP 3 057 008 A1

**FIG. 4**

Munich | Inspire me!

Are you tempted by this destination?

# LONDON

London Listen/'lʌndən/ is the capital city of England and the United Kingdom, the largest metropolitan area in the United Kingdom, and the largest urban zone in the European Union by most measures. Located on the River T...

Activities

Content from Wikipedia & DBPedia, licensed under CC BY-SA

| Coordinates | 51.5072 / -0.1275 | Costal | false |
| Population | 7825200 | Altitude | 46 |
| Av. Temperature (current month) | 8 | Close by | / |

Experiences

I love going to my friends' house that overlooks Primrose Hill, walking to the top of the hill to see the amazing view of London

Europäisches
Patentamt

European
Patent Office

Office européen
des brevets

# EUROPEAN SEARCH REPORT

Application Number

EP 15 30 5219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 634 705 A1 (HYPIOS SAS [FR]; UNIV PARIS IV PARIS SORBONNE [FR]) 4 September 2013 (2013-09-04) * paragraphs [0013], [0030] - [0032], [0037], [0062]; claim 1 * ----- | 1-9 | INV. G06F17/30 G06F17/27 |
| A | US 2010/023482 A1 (MERSHON JEFFREY DAVID [US] ET AL) 28 January 2010 (2010-01-28) * the whole document * ----- | 1-9 | |
| A | ZHEN LIU ET AL: "ModelingWeb Services using Semantic Graph Transformations to aid Automatic Composition", WEB SERVICES, 2007. ICWS 2007. IEEE INTERNATIONAL CONFERENCE ON, IEEE, PI, 1 July 2007 (2007-07-01), pages 78-85, XP031119902, ISBN: 978-0-7695-2924-0 * the whole document * ----- | 1-9 | |
| | | | TECHNICAL FIELDS SEARCHED (IPC) G06F |

The present search report has been drawn up for all claims

| Place of search | Date of completion of the search | Examiner |
|---|---|---|
| Berlin | 24 August 2015 | Haffner, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5219

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2015

| Patent document cited in search report | | Publication date | Patent family member(s) | | Publication date |
|---|---|---|---|---|---|
| EP 2634705 | A1 | 04-09-2013 | EP 2634705 A1<br>WO 2013127951 A1 | | 04-09-2013<br>06-09-2013 |
| US 2010023482 | A1 | 28-01-2010 | US 2010023482 A1<br>US 2011270875 A1 | | 28-01-2010<br>03-11-2011 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020147619 A

- EP 2634705 A